(19) Europäisches Patentamt
European Patent Office
Office européen des brevets

(11) EP 0 817 757 B1

(12) **FASCICULE DE BREVET EUROPEEN**

(45) Date de publication et mention de la délivrance du brevet:
**09.06.1999 Bulletin 1999/23**

(21) Numéro de dépôt: **96910995.8**

(22) Date de dépôt: **28.03.1996**

(51) Int. Cl.[6]: **C01B 25/38**, C01B 25/45, G21F 9/16

(86) Numéro de dépôt international:
**PCT/FR96/00472**

(87) Numéro de publication internationale:
**WO 96/30300 (03.10.1996 Gazette 1996/44)**

(54) **NOUVEAUX PHOSPHATES DE THORIUM, LEUR PROCEDE DE PREPARATION ET LEUR UTILISATION POUR LE STOCKAGE DE PRODUITS RADIOACTIFS**

THORIUMPHOSPHATE, VERFAHREN ZU DEREN HERSTELLUNG UND DEREN VERWENDUNG FÜR DIE LAGERUNG RADIOAKTIVER PRODUKTE

NOVEL THORIUM PHOSPHATES, METHOD FOR PREPARING SAME, AND USE THEREOF FOR STORING RADIOACTIVE MATERIALS

(84) Etats contractants désignés:
**DE FR GB SE**

(30) Priorité: **29.03.1995 FR 9503689**

(43) Date de publication de la demande:
**14.01.1998 Bulletin 1998/03**

(73) Titulaire:
**CENTRE NATIONAL DE LA RECHERCHE SCIENTIFIQUE (CNRS)**
**75016 Paris (FR)**

(72) Inventeurs:
- **GENET, Michel**
  **F-91120 Palaiseau (FR)**
- **BRANDEL, Vladimir**
  **F-94240 L'Hay-les-Roses (FR)**
- **DACHEUX, Nicolas**
  **F-91850 Bouray-sur-Juine (FR)**
- **LINDECKER, Catherine**
  **F-91400 Orsay (FR)**

(74) Mandataire:
**Des Termes, Monique et al**
**Société Brevatome**
**25, rue de Ponthieu**
**75008 Paris (FR)**

(56) Documents cités:
**EP-A- 0 594 485** **US-A- 3 351 436**

- **CHEMISTRY OF MATERIALS, vol. 8, no. 1, Janvier 1996, pages 181-188, XP000575403 BENARD P. & AL.: "Th4(PO4)P2O7, a new thorium phosphate: synthesis, characterization and structure determination"**
- **NEW JOURNAL OF CHEMISTRY, vol. 20, no. 3, Mars 1996, pages 301-310, XP000575193 DACHEUX N. & AL.: "Solid solutions of uranium and thorium phosphates: synthesis, characterization and X-ray photoelectron spectroscopy"**
- **NEW JOURNAL OF CHEMISTRY, vol. 19, no. 3, pages 275-285, XP002007017 MERIGOU C. & GENET M.: "Synthesis and physico-chemical characterization of thorium monophosphate"**
- **CHEMICAL ABSTRACTS, vol. 85, no. 14, 4 Octobre 1976 Columbus, Ohio, US; abstract no. 103175, TANANAEV I. & AL: "Study of thorium phosphates" XP002007020 & IZV. AKAD. NAUK SSSR, vol. 12, no. 5, pages 886-890,**
- **JOURNAL OF THE LESS-COMMON METALS, vol. 102, LAUSANNE CH, pages 179-186, XP002007018 BAMBERGER C. E. & AL.: "The synthesis and characterization of crystalline phosphates of thorium, uranium and neptunium"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 817 757 B1

Printed by Xerox (UK) Business Services
2.16.7/3.6

(Cont. page suivante)

- MATERIALS RESEARCH SOCIETY SYMPOSIUM PROCEEDINGS. SCIENTIFIC BASIS FOR NUCLEAR WASTE, MANAGEMENT XVIII. SYMPOSIUM HELD OCT. 23-27, 1994, KYOTO, JAPAN., vol. 33, PITTSBURG, USA, pages 799-806, XP002007019 GENET & AL.: "Thorium and uranium phosphate syntheses and lixiviation tests for their use as hosts for radwastes."

## Description

La présente invention a pour objet de nouveaux phosphates de thorium, utilisables en particulier pour le stockage à long terme de produits radioactifs tels que des déchets radioactifs et des déchets nucléaires.

Le problème des déchets nucléaires est lié au retraitement des combustibles nucléaires usés que fournissent les centrales nucléaires après utilisation. En effet, le traitement de ces combustibles conduit à la séparation des radioéléments en différentes catégories qui sont, d'une part, l'uranium et le plutonium et, d'autre part, les produits de fission (principalement $^{90}Sr$ et $^{137}Cs$) et les actinides mineurs (Np, Am et Cm). Pour le moment les produits de fission et les actinides mineurs sont stockés ensemble en étant incorporés dans un verre qui a été spécialement mis au point.

Dans le cadre de la nouvelle politique de gestion des déchets nucléaires, on envisage de séparer les produits de fission des actinides mineurs afin de les stocker séparément et on étudie la possibilité d'utiliser d'autres matrices que le verre pour réaliser le stockage de ces actinides.

On recherche donc d'autres matrices qui soient capables de contenir des actinides en quantités importantes, tout en présentant des propriétés de solubilité inférieures à celles des matrices de verre.

Le document EP-A-0594 485 décrit un procédé de préparation de phosphate de thorium permettant d'insolubiliser le thorium 232 ainsi que ses produits de filiation, en particulier le radium 228, et d'épurer des effluents contenant de tels composés. Le phosphate de thorium présente une lixiviabilité extrêmement faible, et convient donc pour un stockage durable et à long terme du thorium 232 et du radium 228. Le phosphate de thorium obtenu dans ce procédé répond à la formule : $Th_3(PO_4)_4$.

La présente invention a pour objet un nouveau phosphate de thorium qui convient non seulement pour le stockage à long terme de produits radioactifs tels que le thorium et ses produits de filiation, mais aussi pour le stockage à long terme des actinides mineurs et d'autres produits de fission.

Selon l'invention, ce nouveau phosphate de thorium répond à la formule : $Th_4P_6O_{23}$ (I), qui peut aussi s'écrire : $Th_4(PO_4)_4(P_2O_7)$(II).

Ce nouveau phosphate de thorium peut être préparé à partir d'un composé de thorium et d'un agent phosphatant, soit par voie humide, soit par voie sèche, à condition d'utiliser des quantités de composé de thorium et d'agent phosphatant correspondant à un rapport molaire Th/P allant de $\frac{1}{4}$ à $\frac{2}{3}$.

Lorsqu'on réalise cette synthèse par voie humide, on peut effectuer les étapes suivantes :

a) préparer une solution aqueuse contenant éventuellement un autre solvant miscible avec l'eau, par exemple l'alcool ou l'acétone, et comprenant un sel de thorium et un agent phosphatant en quantités telles que le rapport Th/P en atomes soit de $\frac{1}{4}$ à $\frac{2}{3}$,

b) évaporer à sec la solution, à une température inférieure à 200 °C, et

c) soumettre le produit sec à un traitement thermique effectué au moins en partie a une température allant de 850 à 1300°C.

La solution aqueuse de départ peut être acide, neutre ou basique, et il peut s'agir d'un milieu dilué ou concentré. Le pH de ce milieu dépend en particulier de l'agent phosphatant utilisé et peut être ajusté par addition de bases ou d'acides appropriés.

A titre d'exemple de bases, on peut citer l'ammoniaque et ses dérivés organiques ou minéraux par exemple $(C_2H_5)_4NOH$ et $NH_2$-$NH_2$. L'acide peut être l'acide chlorhydrique, l'acide nitrique, l'acide acétique.

Les sels de thorium utilisés pour la préparation de cette solution sont de préférence des sels de thorium solubles dans l'eau, par exemple le chlorure $ThCl_4$, le nitrate $Th(NO_3)_4,4H_2O$, l'acétate de thorium Th $(CH_3COO)_4$, l'oxalate de thorium $Th(C_2O_4)_2$ ou tout autre sel de thorium soluble en milieu acide.

L'agent phosphatant utilisé peut être de différents types. A titre d'exemple de tels agents, on peut citer l'acide phosphorique $H_3PO_4$ ou le dihydrogènophosphate d'ammonium $NH_4H_2PO_4$.

Lorsqu'on réalise la synthèse en milieu acide, on procède généralement à une évaporation lente de la solution (par exemple à 150°C) pour obtenir un produit sec. On soumet ensuite le produit sec tout d'abord à un traitement à une température modérée (400-500°C) pour éliminer les matières volatiles, puis à une calcination (850°C à 1300°C) pour conduire au phosphate de thorium cristallisé.

Lorsqu'on opère en milieu basique, on obtient généralement rapidement une prise en masse des réactifs, et on effectue également un séchage à température voisine de 150°C, suivi d'un premier traitement à température modérée et d'un traitement final de calcination comme précédemment.

Entre ces divers traitements, on peut procéder à un ou plusieurs broyages du produit.

Lorsqu'on réalise la synthèse par voie sèche, on fait réagir à l'état solide un composé de thorium et un agent phosphatant choisi parmi le dihydrogénophosphate d'ammonium et $BPO_4$, à une température de 165 à 210°C, puis on effectue au moins un broyage et au moins un traitement thermique du produit obtenu, à une température de 850 à 1300°C.

Comme précédemment les quantités de composé de thorium et d'agent phosphatant utilisées sont telles que le rapport Th/P en atomes soit de $\frac{1}{4}$ à $\frac{2}{3}$.

Lorsqu'on utilise $BPO_4$ comme agent phosphatant, le traitement thermique a lieu entre 850°C et 1300°C, puis on effectue des lavages à l'eau chaude pour éliminer l'oxyde de bore $B_2O_3$ formé in situ.

Le composé de thorium utilisé pour cette synthèse par voie sèche peut être par exemple un oxyde $ThO_2$ ou un sel de thorium comme Th $(NO_3)_4{,}4H_2O$, $ThCl_4$, $Th(C_2O_4)_2$.

Lorsqu'on utilise un rapport $\frac{Th}{P}$ inférieur à $\frac{2}{3}$ par exemple de 3/5, on obtient les réactions suivantes :

$$6ThCl_4 + 10H_3PO_4 \rightarrow Th_4P_6O_{23} + 2ThP_2O_7 + 2kHCl\uparrow + 3H_2O\uparrow$$

Le système comme l'indique la réaction est biphasé mais lorsqu'on chauffe à haute température lors du traitement thermique, par exemple à une température supérieure ou égale à 1200°C mais inférieure à 1300°C, le diphosphate de thorium se décompose avec dégagement de l'excès de phosphate sous forme de $P_4O_{10}$ et formation de $Th_4P_6O_{23}$ suivant la réaction :

$$8ThP_2O_7 \rightarrow 2Th_4P_6O_{23} + P_4O_{10}\uparrow$$

En revanche, lorsque le rapport est supérieur à $\frac{2}{3}$ (excès de thorium), celui-ci se trouve sous la forme de $ThO_2$ et l'on n'obtient pas de phosphate pur $Th_4P_6O_{23}$, le système reste biphasé et correspond à un mélange de $Th_4P_6O_{23}$ et de $ThO_2$.

L'ensemble de ces différentes possibilités est représenté sur le schéma ci-dessous :

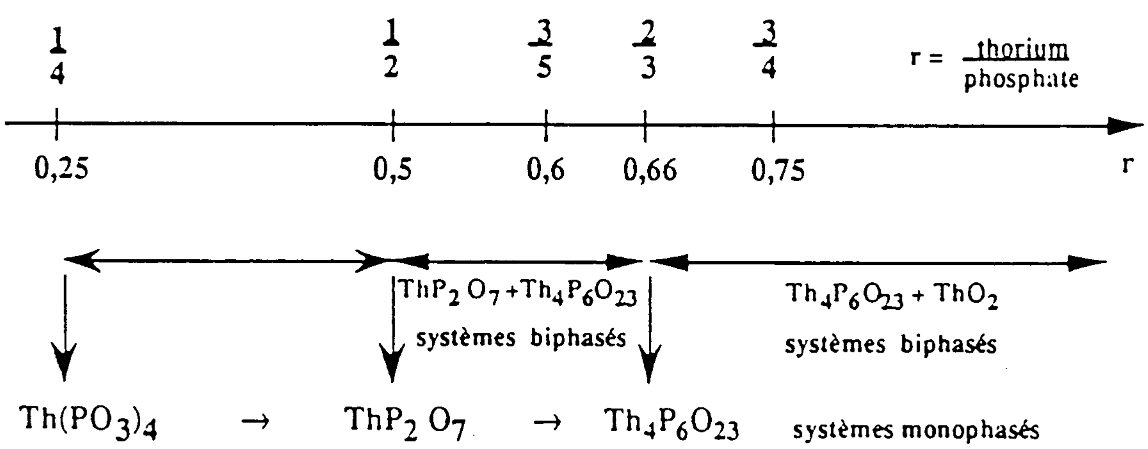


Ainsi, la décomposition par traitement thermique aboutit à un composé pur de formule unique : $Th_4P_6O_{23}$ Avec $r = \frac{1}{2}$, on a :

$$ThCl_4 + 2\ H_3PO_4 \rightarrow ThP_2O_7 + 4\ HCl\uparrow + H_2O\uparrow$$

Avec $r = \frac{1}{4}$, on a :

$$ThCl_4 + 4\ H_3PO_4 \rightarrow Th(PO_3)_4 + 4\ HCl\uparrow + 4\ H_2O\uparrow\ 2\ Th(PO_3)_4 \rightarrow 2\ ThP_2O_7 + P_4O_{10}\uparrow$$

Ces réactions sont suivies de :

$$8\ ThP_2O_7 \rightarrow 2\ Th_4P_6O_{23} + P_4O_{10}\uparrow$$

Ainsi, tout excès de phosphate est toujours décomposé par chauffage, alors que tout excès de thorium se manifeste par la formation de $ThO_2$ qui subsiste quelle que soit la température du traitement thermique.

L'invention a également pour objet des phosphates mixtes de thorium et d'un autre élément, qui conviennent notamment pour le stockage à long terme d'éléments radioactifs naturels ou artificiels.

Ces phosphates mixtes de thorium répondent à la formule :

$$Th_{4-x} M_{4x/v} P_6 O_{23} \quad (III)$$

dans laquelle :

- M est un cation monovalent, bivalent, trivalent ou tétravalent,
- v représente l'état de valence du cation et est égal à 1, 2,3 ou 4, et
- x est tel que :

| | |
|---|---|
| $0 < x \leq 3$ | lorsque v = 4, |
| $0 < x \leq 0,26$ | lorsque v = 3, |
| $0 < x \leq 0,1$ | lorsque v = 2, et |
| $0 < x \leq 0,036$ | lorsque v = 1. |

Les cations monovalents ou bivalents susceptibles d'être inclus dans ce phosphate mixte peuvent être en particulier des métaux alcalins tels que Cs ou alcalino-terreux tels que Sr, Ba et Ca ; les cations trivalents peuvent être en particulier des éléments des terres rares ou des actinides trivalents comme Am, Cm ; les cations tétravalents peuvent être l'uranium et les actinides comme Np, Pu.

On précise que dans la formule (III) donnée ci-dessus, le cation M peut contenir uniquement un métal ou être formé par l'association d'un métal avec d'autres éléments tels que l'oxygène, comme c'est le cas par exemple des cations $UO_2^{2+}$, $NpO_2^{2+}$ et $PuO_2^{2+}$.

Les phosphates mixtes de formule (III) peuvent être préparés par voie humide ou par voie sèche par des procédés analogues à ceux utilisés pour préparer le phosphate de thorium pur de formule (I) en ajoutant à la solution aqueuse de départ ou aux produits réagissant à l'état solide un composé du cation à inclure. Les quantités de cation ajoutées ne doivent pas dépasser les limites prescrites pour que la structure cristalline du phosphate mixte de formule (III) obtenue soit la même que celle du phosphate de thorium pur de formule I et que le système demeure monophasé. Ainsi, elles ne doivent pas représenter un excès par rapport à la valeur maximale de x donnée pour la formule (III). Par ailleurs, les quantités de sels, de composés et d'agent phosphatant doivent être telles que le rapport (Th+M)/P soit d'environ

$$\frac{4-x+\frac{4x}{v}}{6}.$$

Dans tous les procédés de synthèse des phosphates de thorium de formule (I), (II) et (III) décrits ci-dessus, les traitements thermiques peuvent être effectués dans des creusets en platine ou en matériau réfractaire tel que l'alumine, la porcelaine, la silice, en présence d'air ou sous une atmosphère de gaz inerte tel que l'argon, l'azote.

Le chauffage peut être réalisé rapidement, par exemple à une vitesse de 25°C/min., ou au contraire lentement, par exemple à une vitesse de 1°C/min. De même le refroidissement final peut être rapide ou lent.

Toutefois dans le cas des phosphates contenant des éléments facilement oxydables comme de l'uranium, on préfère réaliser le traitement thermique sous atmosphère inerte.

Les températures utilisées pour le traitement thermique final dépendent du procédé de synthèse, des quantités de réactifs utilisées et des éléments ajoutés dans le cas des phosphates mixtes de thorium.

Dans les synthèses par voie humide, des températures maximales de 1150°C, pendant des durées de 6 à 24 h, sont généralement suffisantes pour obtenir le phosphate de thorium (masse de 5 à 25 grammes).

Dans les synthèses par voie sèche, on peut opérer à des températures voisines de 900°C, pendant 6 à 24 h pour le phosphate pur, et à des températures supérieures, par exemple à 1300°C, pendant 6 à 24 h dans le cas des phosphates mixtes.

Dans les synthèses par voie sèche, les produits de départ sont intimement broyés pour accélérer la réaction à l'état solide.

On peut aussi préparer le phosphate mixte de thorium de formule III par un procédé selon lequel on fait réagir à l'état solide, sous forme de poudre, à une température de 850 à 1350°C, du phosphate de thorium de formule $Th_4P_6O_{23}$ avec un phosphate du cation M en quantité telle que le cation M ne représente pas un excès par rapport à la valeur maximale de x dans la formule (III), puis on effectue un traitement thermique du produit obtenu, à une température de 850 à 1300°C.

L'invention a encore pour objet un procédé de stockage de produits radioactifs contenant des radioéléments, qui consiste à inclure ces radioéléments dans un phosphate mixte de thorium de formule :

$$Th_{4-x} M_{4x/v} P_6 0_{23} \quad (III)$$

dans laquelle :

- M représente un cation monovalent, bivalent, trivalent ou tétravalent contenant le radioélément,
- v représente l'état de valence du cation et est égal à 1, 2, 3 ou 4, et
- x est tel que :

| | |
|---|---|
| $0 < x \leq 3$ | lorsque v = 4, |
| $0 < x \leq 0,26$ | lorsque v = 3 |
| $0 < x \leq 0,1$ | lorsque v = 2, et |
| $0 < x \leq 0,036$ | lorsque v = 1. |

On précise que le terme "radioélément" concerne aussi bien des éléments radioactifs naturels que des éléments radioactifs articiels.

Selon une variante de réalisation, on peut aussi réaliser le stockage des produits radioactifs en dispersant ceux-ci dans une matrice de phosphate de thorium de formule (I) ou de phosphate mixte de thorium de formule (III) décrits ci-dessus.

Les produits radioactifs peuvent être constitués par du radium, des actinides majeurs : uranium et plutonium, des actinides mineurs : neptunium, américium et curium, et/ou des produits de fission.

L'utilisation des phosphates de thorium de l'invention pour le stockage de produits radioactifs présente de nombreux avantages, notamment pour la rétention des actinides mineurs.

En effet, ces phosphates de thorium présentent une très faible solubilité qui les rend résistants à la lixiviation.

Le thorium est un élément peu coûteux car il n'a aucun débouché industriel connu à ce jour. Or, il est produit continuellement dans les usines de production des terres rares car les minerais de lanthanides contiennent presque tous du thorium. Il constitue donc un sous-produit gênant et son stockage en tant que déchet faiblement radioactif est lui-même un problème. Aussi, son utilisation pour stocker d'autres produits radioactifs est intéressante.

L'acide phosphorique et les phosphates en général sont des produits bien connus de l'industrie chimique et sont peu onéreux.

Le phosphate de thorium de l'invention est donc très intéressant pour réaliser le stockage à long terme d'éléments radioactifs, notamment des actinides mineurs car il peut accepter 5 à 10 % de ces derniers.

Il convient également pour le confinement et la rétention du radium présent dans des résidus miniers provenant en particulier des mines d'uranium. En effet, ces mines produisent des résidus liquides et solides en quantité importante, qui contiennent du radium en concentration supérieure à la limite imposée par la législation.

On peut encore l'utiliser pour le stockage et la rétention de produits de fission tels que $^{90}Sr$ et les lanthanides trivalents.

D'autres caractéristiques et avantages de l'invention apparaîtront mieux à la lecture de la description qui suit donnée bien entendu à titre illustratif et non limitatif en référence aux figures annexées.

La figure 1 est le diagramme de diffraction des rayons X du phosphate de thorium pur de l'invention.

La figure 2, donnée à titre comparatif, illustre le diagramme de diffraction des rayons X du phosphate de thorium conforme au document EP-A-594 485.

La figure 3 est le spectre d'absorption infrarouge du phosphate de thorium pur de l'invention.

La figure 4 est une courbe illustrant les résultats de tests de lixiviation de $^{230}U$ à partir d'un phosphate mixte le contenant. Cette courbe représente le pourcentage d'activité libérée dans le lixiviat en fonction du temps (en heures).

**<u>EXEMPLE 1</u> : <u>Préparation de $Th_4P_6O_{23}$ en milieu acide</u>.**

Dans cet exemple on réalise la synthèse de $Th_4P_6O_{23}$ à partir de $ThCl_4$ et d'acide phosphorique en opérant en milieu acide concentré.

La réaction globale de synthèse correspond au schéma suivant :

$$4\,ThCl_4 + 6H_3PO_4 \rightarrow Th_4P_6O_{23} + 16HCl\uparrow + H_2O\uparrow$$

On mélange 67,5 $cm^3$ d'une solution aquaalcoolique ($H_2O$/éthanol, 50/50 en volume) de $ThCl_4$ à 1 mol/l avec 6,75 $cm^3$ d'une solution concentrée d'acide phosphorique $H_3PO_4$ à 15 mol/l. On obtient ainsi une solution limpide très acide, ayant un pH inférieur à 0.

Après évaporation à sec de la solution sur un bain de sable, à 140°C pendant 4 à 5 heures, on effectue un broyage du résidu obtenu, puis on porte le résidu broyé à 400°C pendant 2 heures avec une vitesse de chauffage de

5°C/min. Puis, on calcine à 1150°C pendant 10 heures dans un creuset d'alumine.

On obtient ainsi 25 g de phosphate de thorium $Th_4P_6O_{23}$ et on vérifie les caractéristiques de ce produit par diffraction aux rayons X, specroscopie d'absorption infrarouge, analyse par microsonde électronique et spectroscopie de photoélectrons.

Le diagramme de diffraction des rayons X est obtenu au moyen de l'appareil Philips PW 1050 en utilisant la raie $K_\alpha$ du cuivre ($\lambda$ = 1,5418 Å, filtre Ni). Ce diagramme est représenté sur la figure 1 et il comporte des raies à $2\theta$ = 17°, $2\theta$ = 20,5° et $2\theta$ = 30,5°.

A titre comparatif, on a donné sur la figure 2 le spectre de diffraction X du produit obtenu dans EP-A-594 485.

Si l'on compare ces deux spectres, on remarque que le spectre de la figure 2 présente une raie (1) à d = 3,204 Å qui est celle de la thorine $ThO_2$; cette raie est absente du spectre ce la figure 1. Par ailleurs, le spectre de la figure 2 présente une hypertrophie de la raie (2) à d = 2,800 Å par rapport à la même raie (2) sur la figure 1 correspondant au phosphate de thorium de l'invention.

Il est donc clair que le phosphate de thorium de l'invention est différent du phosphate de thorium décrit dans EP-A-594 485.

D'après les indexations cristallographiques réalisées sur poudre et sur monocristal, le phosphate de thorium de l'invention cristallise dans un système orthorhombique (groupe d'espace Pbcm et Z = 2 ).

La valeur mesurée de la densité est égale à 5,23 g/cm$^3$ en bon accord avec celle calculée (5,17g/cm$^3$). Les paramètres de maille sont les suivants :

a = 1,04082 (9) nm
b = 1,2836 (1) nm.
c = 0,70600 (8) nm
V = 0,943 nm$^3$

Sur la figure 3, on a représenté le spectre d'absorption infrarouge du phosphate de thorium de l'invention. Ce spectre confirme la présence simultanée de groupements orthophosphates $PO_4$ (révélés par la présence des bandes attribuées aux vibrations de valence (entre 950 cm$^{-1}$ et 1250 cm$^{-1}$) et de déformation (en deçà de 600 cm$^{-1}$), et de groupements diphosphates $P_2O_7$ dont les vibrations caractéristiques associées à la liaison P-O-P sont situées vers 950 cm$^{-1}$ et vers 750 cm$^{-1}$ (doublet pour $Th_4P_6O_{23}$). Ce spectre confirme ainsi la formule proposée : $Th_4(P0_4)_4$ $P_2O_7$.

Etant donné la très faible solubilité du phosphate de thorium obtenu conformément à l'invention, les méthodes de chimie analytique classiques par voie aqueuse ne peuvent être utilisées. On a donc utilisé une méthode physico-chimique. permettant l'analyse élémentaire directement sur le solide.

Par microsonde électronique, l'analyse a confirmé, pour le phosphate de thorium, l'existence d'une seule phase dont le rapport Th/P est identique à celui de la formule chimique.

Cette analyse par microsonde électronique indique que :

- le produit est anhydre,
- les analyses bouclent à 96 % en moyenne,
- il n'y a pas de mélange de phase, et
- le rapport Th/P est = 0,67 ± 0,02.

Ceci correspond à la formule chimique Th/P = 2/3 soit 0,66.

La spectrocospie de photoélectrons confirme également la formule chimique $Th_4(PO_4)_4P_2O_7$.

**EXEMPLE 2 :**

On suit le même mode opératoire que dans l'exemple 1, pour préparer $Th_4P_6O_{23}$ pur par voie humide mais en utilisant comme sel de thorium du nitrate de thorium $Th(NO_3)_4$, $_4H_2O$.

Cette synthèse est effectuée en milieu acide dilué et elle correspond au schéma réactionnel suivant :

$$4Th(NO_3)_4, 4H_2O + 6H_3PO_4 \rightarrow Th_4P_6O_{23} + 16HNO_3\uparrow + 17H_2O\uparrow$$

Dans ce cas, on utilise 76,7 cm$^3$ d'une solution de nitrate de thorium à 0,88 mol/l obtenue par dissolution de 48,61 g de nitrate cristallisé dans 100 cm$^3$, et 99,3 cm$^3$ d'une solution d'acide phosphorique à 1,02 mol/l obtenue par dilution de la solution concentrée.

On réalise ensuite le séchage et la calcination comme dans l'exemple 1.

Le produit obtenu présente les mêmes caractéristiques que celles du phosphate de thorium de l'exemple 1.

**EXEMPLE 3 : Préparation de $Th_4P_6O_{23}$ en milieu basique.**

Dans cet exemple, on prépare le phosphate de thorium à partir de $ThCl_4$ et de $NH_4H_2PO_4$ dans une solution basique. La réaction correspond au schéma suivant :

$$4\ ThCl_4 + 6\ NH_4H_2PO_4 + 10\ NH_{3aq} \rightarrow Th_4P_6O_{23} + 16NH_4Cl\uparrow + H_20\uparrow$$

On mélange 67,5 $cm^3$ d'une solution aqueuse de $ThCl_4$ à 1 mol/l avec 101,3 $cm^3$ d'une solution aqueuse de $NH_4H_2PO_4$ à 1 mol/l, rendue basique à l'aide d'une solution d'ammoniaque, et on ajuste le pH à 10 par addition de $NH_3$ aqueux.

Dans ces conditions, on observe la prise en masse totale des réactifs à la température ambiante. On élimine les matières les plus volatiles par séchage au bain de sable à 140°C pendant 4 à 5 heures, puis on broie le résidu. On soumet le résidu broyé à un traitement thermique, à 500°C en programmant une rampe de chauffage à 5°C par minute pour évaporer $NH_4Cl$, puis on effectue une calcination à 1150°C pendant 10 heures dans un creuset d'alumine.

On obtient ainsi 25 g de phosphate de thorium qui présente les mêmes caractéristiques que celles du produit obtenu dans l'exemple 1.

**EXEMPLE 4 : Préparation de phosphate de thorium par voie sèche.**

Dans cet exemple, on fait réagir à l'état solide du nitrate de thorium avec du dihydrogénophosphate d'ammonium.

Dans ce but, on introduit dans une nacelle d'alumine tapissée ou non par une feuille de platine 37,25 g de $Th(NO_3)_4$, $4H_2O$ et 11,65 g de $NH_4H_2PO_4$. Afin d'éviter les pertes par projection lors de la transformation de l'agent phosphatant, on effectue un premier palier de chauffage de 12 à 24 heures à 165°C. On réalise ensuite des paliers de chauffages successifs de 1 heure, sur le domaine de température de 170 à 190°C par pas graduel de 5°C. On effectue un dernier traitement thermique à 250°C pendant 6 heures, puis on procède au broyage du mélange réactionnel.

On effectue deux recuits successifs, respectivement à 500°C durant 4 heures, puis à 900°C durant au moins 6 heures, pour obtenir une perte de la totalité des produits volatils, ce qui correspond à une perte de masse d'environ 14 %. Comme la masse de phosphate de thorium synthétisé est supérieure à 5 g, il est nécessaire d'effectuer plusieurs recuits à 900°C pour obtenir une phase pure ou d'augmenter la température du dernier traitement thermique. Dans ce cas, chaque recuit est suivi d'un broyage pour assurer une parfaite homogénéisation du milieu réactionnel.

Le phosphate de thorium obtenu présente les mêmes caractéristiques que celles du produit de l'exemple 1.

**EXEMPLE 5 : Préparation d'un phosphate mixte de thorium de formule $Th_2U_2(PO_4)_4P_20_7$**

On réalise cette synthèse par voie humide en utilisant comme sel de thorium $ThCl_4$ et comme sel d'uranium $UCl_4$ et de l'acide phosphorique. Dans ce cas, le rapport initial uranium (IV)/thorium est de 1/1 et le rapport initial (uranium (IV) + thorium)/phosphate est de 2/3.

On mélange 20,9 $cm^3$ d'une solution aqueuse à 1,6 mol/l de $UCl_4$, 33,5 $cm^3$ d'une solution aqueuse à 1 mol/l de $ThCl_4$ et 6,7 $cm^3$ d'une solution concentrée d'acide phosphorique à 15 mol/l de $H_3PO_4$. On évapore ensuite à sec la solution comme dans l'exemple 1, on effectue un broyage du résidu et on le traite à 400°C avec une vitesse de montée en température de 5°C/ min. pendant 2 heures sous atmosphère inerte (argon). On calcine ensuite le produit à 1150°C durant 15 heures, sous atmosphère inerte.

On obtient les mêmes résultats en utilisant des solutions aquaalcooliques ($H_2O$/éthanol) au lieu de solutions aqueuses de $ThCl_4$ et $UCl_4$.

**EXEMPLE 6 : Préparation de $Th_3U(PO_4)_4P_2O_7$**

Dans cet exemple, on réalise la synthèse par voie sèche en utilisant le phosphate de thorium $Th_4P_6O_{23}$ préparé dans l'exemple 1 et du diphosphate d'uranium (IV) $\alpha$-$UP_2O_7$.

Dans ce but, on mélange 6,92 g de $\alpha$-$UP_2O_7$ et 18,67 g de $Th_4P_6O_{23}$ préparé dans l'exemple 1 et on le soumet à un broyage. On chauffe ensuite le mélange pendant 30 minutes à 850°C sous atmosphère inerte (argon), en utilisant une rampe égale à 5°C/min., puis on le porte pendant 20 heures à 1300°C sous atmosphère inerte. On obtient finalement 25 g de $Th_3U(PO_4)_4P_2O_7$.

**Exemple 7 : Préparation de phosphate mixte de thorium de formule $Th_3U(PO_4)_4P_2O_7$.**

Dans cet exemple, on réalise également la synthèse par voie sèche mais en partant d'oxyde d'uranium,

d'oxyde de thorium et de dihydrogénophosphate d'ammonium.

Dans ce but, on chauffe à 210°C pendant 20 heures un mélange préalablement broyé de 4,54 g d'oxyde d'uranium $UO_2$, 13,31 g d'oxyde de thorium $Th0_2$, et 11,59 g de $NH_4H_2PO_4$. On porte ensuite le mélange pendant 20 heures à 1300°C sous argon. On obtient ainsi un phosphate mixte de thorium et d'uranium conforme à l'invention.

**EXEMPLE 8 : Préparation de $Th_2U_2(PO_4)_4$ $P_2O_7$ marqué par $^{230}U$**

Dans cet exemple, on suit le même mode opératoire que dans l'exemple 5, mais on part d'un mélange de solutions aqueuses de 0,485 $cm^3$ $^{238}UCl_4$ (1,6M) et de 0,250 $cm^3$ $^{230}UCl_4$ ($1,1.10^{-7}$ M), et on utilise 0,240 $cm^3$ d'acide orthophosphorique à 4,85 mol/l. L'activité totale en $^{230}U$ est de 6,60 MBq. Le résidu de l'évaporation à sec est broyé puis traité à 400°C, sous argon, pendant 2 heures, puis à 1050°C pendant 15 heures.

On obtient ainsi 0,2 g de phosphate mixte marqué à l'isotope $^{230}U$, après l'ensemble des étapes de la synthèse.

**EXEMPLE 9 :**

Dans cet exemple, on teste la résistance à la lixiviation du produit obtenu dans l'exemple 8.

Dans ce but, on met en contact 200 mg du produit avec 4 $cm^3$ d'eau distillée et on renouvelle la totalité de la solution en contact avec la poudre plusieurs fois de manière à laver sa surface et ainsi éliminer les grains de petites dimensions.

On agite ensuite l'échantillon de poudre durant 3 ou 4 jours dans 4 $cm^3$ d'eau, puis ensuite on centrifuge à 3 500 tours/min. pendant 30 minutes afin de procéder à une première séparation des phases solide et liquide. La majeure partie de la solution en contact (3,5 $cm^3$) est alors prélevée avant d'être renouvelée. Après séparation de la phase solide et de la phase liquide, on détermine la quantité d'uranium passée en solution en mesurant la radioactivité due à $^{230}U$ dans la phase liquide par spectrométrie $\gamma$.

A partir du pourcentage d'activité mesurée en solution par rapport à l'activité initiale introduite pour la préparation du produit, on calcule la concentration équivalente de l'uranium total passé en solution en supposant à priori que $^{230}U$ et $^{238}U$ se comportent de la même façon.

Les résultats obtenus sont donnés dans le tableau 2 qui suit.

Tableau 2

| Activité initiale introduite (MBq) | Activité spécifique (MBq/g de phosphate) | Pourcentage d'activité mesurée en solution | Concentration $c_{238U}$ équivalente (M) |
|---|---|---|---|
| 6,60 | 23,6 | $(6,9 \pm 1,0)\ 10^{-3}$ | $(5,5 \pm 0,8)\ 10^{-6}$ |

La figure 4 représente le pourcentage d'activité mesurée en solution en fonction du temps (en heures).

Au vu de cette figure, on remarque que les premiers prélèvement conduisent à des valeurs élevées de pourcentage d'activité dans le lixiviat, mais après 500 heures de contact, ce pourcentage d'activité est stable et s'établit à $7.10^{-3}$ % environ.

Cette valeur est comparable à celle que l'on obtient dans le cas du phosphate de thorium pur $Th_4P_60_{23}$ marqué par $^{223}$ Ra où, après stabilisation, le pourcentage d'activité en solution représente $5,3.10^{-3}$ % de l'activité initiale.

On peut de plus noter que la concentration de $^{238}U$ correspondante est voisine de 5,5. $10^{-6}$ mol/l et qu'elle est très inférieure à celle mesurée pour le phosphate d'uranium pur $U(UO_2)(PO_4)_2$ pour lequel elle est, dans les mêmes conditions, de $2,5.10^{-4}$ mol/l.

Si l'on effectue les mêmes tests de lixiviation sur $Th_2U_2(PO_4)_4P_2O_7$ mais en utilisant une solution aqueuse à 1 mol/l de $HClO_4$ au lieu d'eau distillée, la concentration équivalente en uranium 238 passe à $8,1.10^{-4}$ mol/l ; ce phosphate mixte de thorium et d'uranium a donc une résistance à la corrosion en milieu acide supérieure à celle de produits analogues.

**EXEMPLE 10 : Préparation du $Th_4P_6O_{23}$ contenant 8 % en mole de $UO_2^{2+}$**

Pour cette synthèse, on suit le même mode opératoire que dans l'exemple 5 mais on utilise un rapport initial U(IV)/Th de 0,08 et on effectue le traitement thermique final à 1150°C, pendant 15 heures, sous air, ce qui conduit à la formation de $UO_2^{2+}$ dans le phosphate obtenu.

Des tests de lixiviation effectués dans les mêmes conditions que celles de l'exemple 9, conduisent après 15 jours de contact à une concentration moyenne en uranium égale à $2,0.10^{-6}$ mol/l, ce qui correspond à $1,7.10^{-2}$ % de

l'uranium présent dans le solide.

On obtient ainsi des résultats équivalents à ceux de l'exemple 9.

**EXEMPLE 11 : Préparation de $Th_4P_60_{23}$ contenant 1% en mole de $Eu^{3+}$**

On suit le même mode opératoire que dans l'exemple 5 pour préparer ce phosphate mixte, mais en utilisant un rapport initial Eu(III)/Th de 0,01.

On soumet le produit obtenu à des tests de lixiviation dans les mêmes conditions que celles de l'exemple 9.

Après 2 mois de contact, la concentration en europium de la phase aqueuse déterminée par fluorescence est de $(1,9 \pm 0,6).10^{-7}$ mol/l, soit un pourcentage d'europium proche de $(1,4 \pm 0,4).\ 10^{-2}$ % de l'europium introduit dans le phosphate mixte.

Les résultats des exemples 9 à 11 montrent que les concentrations des différentes espèces mesurées dans le lixiviat sont liées à la dissolution du phosphate de thorium lui-même et que les effets radiolytiques n'ont pas une grande influence sur cette matrice.

**EXEMPLE 12 : Préparation de $Th_4P_60_{23}$ marqué par : $^{137}Cs$, $^{85}Sr$ et $^{60}Co$**

Dans cet exemple, on réalise la synthèse d'un phosphate mixte de thorium comportant trois éléments radioactifs différents. On part d'un mélange de solutions aqueuses comprenant 0,730 $cm^3$ de $ThCl_4$(1,01 M) et 0,5 $cm^3$ d'une solution dont l'activité totale en $^{137}Cs$ est de 2,48 MBq, celle en $^{85}Sr$ de 1,50 MBq et celle en $^{60}Co$ de 4,19 MBq. On ajoute dans ce mélange 0,230 $cm^3$ d'acide orthophosphorique à 4,85 mol/l. Le résidu de l'évaporation à sec est broyé, puis traité à 400°C pendant 2 heures, puis à 1050°C pendant 15 heures.

On obtient ainsi 0,2 g de phosphate de thorium marqué aux isotopes : $^{137}Cs$, $^{85}Sr$, et $^{60}Co$ après l'ensemble des étapes de la synthèse.

**EXEMPLE 13**

Dans cet exemple, on teste la résistance à la lixiviation du produit obtenu dans l'exemple 12.

Dans ce but, on met en contact 200 mg du produit avec 4 $cm^3$ d'eau distillée et on renouvelle la totalité de la solution, en contact avec la poudre, plusieurs fois de manière à laver la surface et ainsi éliminer les grains de petites dimensions.

On agite ensuite l'échantillon de poudre durant 3 à 4 jours dans 4 $cm^3$ d'eau, ensuite on centrifuge à 3500 tours/minute pendant 30 minutes, puis à 13000 tours/minute pendant 30 minutes afin de procéder à la séparation des phases solide et liquide. La majeure partie de la solution en contact (3,5 $cm^3$) est alors prélevée avant d'être renouvelée. Après séparation de la phase solide et de la phase liquide, on détermine la quantité de chaque élément radioactif passée en solution en mesurant la radioactivité due à chacun d'eux dans la phase liquide par spectrométrie $\gamma$. Les pourcentages d'activité mesurée en solution, par rapport à l'activité initiale introduite, sont reportés dans le tableau 3 qui suit.

Tableau 3

| Elément radioactif | Activité initiale introduite (MBq) | Activité spécifique (MBq/g de phosphate) | Pourcentage d'activité mesurée en solution |
|---|---|---|---|
| $^{137}Cs$ | 2,48 | 12,40 | $(1,4 \pm 0,2).10^{-2}$ |
| $^{85}Cs$ | 1,50 | 7,50 | $(7,1 \pm 1,0).10^{-3}$ |
| $^{60}Co$ | 4,19 | 20,95 | $(5,9 \pm 0,8)\ 10^{-3}$ |

## Revendications

1. Phosphate de thorium de formule $Th_4P_6O_{23}$ (I) ou $Th_4(PO_4)_4\ (P_2O_7)$ (II).

2. Phosphate de thorium selon la revendication 1, caractérisé en ce qu'il présente le diffractogramme de rayons X représenté sur la figure 1.

3. Phosphate de thorium selon l'une quelconque des revendications 1 et 2, caractérisé en ce qu'il cristallise dans un système orthorhombique, groupe d'espace Pbcm et Z = 2.

**4.** Procédé de préparation de phosphate de thorium de formule $Th_4P_6O_{23}$, caractérisé en ce qu'il comprend les étapes suivantes :

a) préparer une solution aqueuse contenant éventuellement un autre solvant miscible à l'eau, et comprenant un sel de thorium et un agent phosphatant en quantités telles que le rapport Th/P en atomes soit de $\frac{1}{4}$ à $\frac{2}{3}$,
b) évaporer à sec la solution, à une température inférieure à 200°C, et
c) soumettre le produit sec à un traitement thermique effectué au moins en partie à une température allant de 850 à 1300°C.

**5.** Procédé selon la revendication 4, caractérisé en ce que le sel de thorium est le tétrachlorure de thorium ou le nitrate de formule Th $(NO_3)_4$, $4H_2O$.

**6.** Procédé selon l'une quelconque des revendications 4 et 5, caractérisé en ce que l'agent phosphatant est l'acide phosphorique ou le dihydrogénophosphate d'ammonium.

**7.** Procédé de préparation de phosphate de thorium de formule : $Th_4P_6O_{23}$, caractérisé en ce que l'on fait réagir à l'état solide un composé de thorium et un agent phosphatant choisi parmi le dihydrogénophosphate d'ammonium et le phosphate de bore $BPO_4$, à une température de 165 à 210°C (si on utilise $NH_4H_2PO_4$), puis on effectue au moins un broyage et au moins un traitement thermique du produit obtenu, à une température de 850 à 1300°C, les quantités de composé de thorium et d'agent phosphatant étant telles que le rapport Th/P en atomes soit de $\frac{1}{4}$ à $\frac{2}{3}$.

**8.** Phosphate mixte de thorium de formule :

$$Th_{4-x} M_{4x/v} P_6 0_{23} \quad \text{(III)}$$

dans laquelle :

- M est un cation monovalent, bivalent, trivalent ou tétravalent,
- v représente l'état de valence du cation et est égal à 1, 2, 3 ou 4, et
- x est tel que :

| | |
|---|---|
| $0 < x \leq 3$ | lorsque v = 4, |
| $0 < x \leq 0{,}26$ | lorsque v = 3, |
| $0 < x \leq 0{,}1$ | lorsque v = 2, et |
| $0 < x \leq 0{,}036$ | lorsque v = 1. |

**9.** Phosphate mixte de thorium selon la revendication 8, caractérisé en ce que M représente U et v est égal à 4.

**10.** Phosphate mixte de thorium selon la revendication 8, caractérisé en ce que M représente un métal acalino terreux ou $UO_2^{2+}$ et v est égal à 2.

**11.** Phosphate mixte de thorium selon la revendication 8, caractérisé en ce que M représente un élément des terres rares ou un actinide trivalent et v est égal à 3.

**12.** Phosphate mixte de thorium selon l'une quelconque des revendications 8 à 11, caractérisé en ce que le cation M comprend un élément radioactif.

**13.** Procédé de préparation d'un phosphate mixte de thorium de formule :

$$Th_{4-x} M_{4x/v} P_6 O_{23} \quad \text{(III)}$$

dans laquelle :

- M est un cation monovalent, bivalent, trivalent ou tétravalent,
- v représente l'état de valence du cation et est égal à 1, 2, 3 ou 4, et
- x est tel que :

$0 < x \leq 3$ lorsque v = 4,

$0 < x \leq 0{,}26$ lorsque $v = 3$,
$0 < x \leq 0{,}1$ lorsque $v = 2$, et
$0 < x \leq 0{,}036$ lorsque $v = 1$,

caractérisé en ce qu'il comprend les étapes suivantes :

a) préparer une solution aqueuse ou aquaalcoolique comprenant un sel de thorium, un sel du cation M et un agent phosphatant en quantités telles que le rapport (Th + M)/P en atomes soit d'environ

$$\frac{4-x+\frac{4x}{v}}{6}$$

et que le cation M ne soit pas en excès par rapport à la valeur maximale de x donnée dans la formule (III),
b) évaporer à sec la solution à une température inférieure à 200°C, et
c) soumettre le produit sec à un traitement thermique effectué à une température de 850 à 1300°C.

**14.** Procédé de préparation d'un phosphate mixte de thorium de formule :

$$Th_{4-x} M_{4x/v} P_6 0_{23} \qquad (III)$$

dans laquelle :

- M est un cation monovalent, bivalent, trivalent ou tétravalent,
- v représente l'état de valence du cation et est égal à 1, 2, 3 ou 4, et
- x est tel que :

$0 < x \leq 3$ lorsque $v = 4$,
$0 < x \leq 0{,}26$ lorsque $v = 3$
$0 < x \leq 0{,}1$ lorsque $v = 2$, et
$0 < x \leq 0{,}036$ lorsque $v = 1$,

caractérisé en ce que l'on fait réagir à l'état solide un composé de thorium, un composé de M et un agent phosphatant choisi parmi le dihydrogénophosphate d'ammonium et le phospate de bore $BPO_4$, à une température de 165 à 210°C, puis on effectue au moins un broyage et au moins un traitement thermique du produit obtenu à une température de 850 à 1300°C, les quantités de composé de thorium, de composé du cation M, et d'agent phosphatant étant telles que le rapport (Th+M)/P en atomes soit d'environ

$$\frac{4-x+\frac{4x}{v}}{6}$$

et que M ne soit pas en excès par rapport à la valeur maximale de x donnée pour la formule (III).

**15.** Procédé de préparation d'un phosphate mixte de thorium de formule :

$$Th_{4-x} M_{4x/v} P_6 0_{23} \qquad (III)$$

dans laquelle :

- M est un cation monovalent, bivalent, trivalent ou tétravalent,
- v représente l'état de valence du cation et est égal à 1, 2, 3 ou 4, et
- x est tel que :

$0 < x \leq 3$ lorsque $v = 4$,
$0 < x \leq 0{,}26$ lorsque $v = 3$,

| | |
|---|---|
| $0 < x \leq 0{,}1$ | lorsque v = 2, et |
| $0 < x \leq 0{,}036$ | lorsque v = 1, |

caractérisé en ce que l'on fait réagir à l'état solide, sous forme de poudre, à une température de 850 à 1350°C, du phosphate de thorium de formule $Th_4P_60_{23}$ avec un phosphate du cation M en quantité telle que le cation M ne représente pas un excès par rapport à la valeur maximale de x dans la formule (III), puis on effectue un traitement thermique du produit obtenu, à une température de 850 à 1300°C.

**16.** Procédé de stockage de produits radioactifs contenant des radioéléments , caractérisé en ce qu'il consiste à inclure ces radioéléments dans un phosphate mixte de thorium de formule :

$$Th_{4-x}\, M_{4x/v}\, P_60_{23} \qquad (III)$$

dans laquelle :

- v représente l'état de valence du cation et est égal à 1, 2, 3 ou 4, et
- M représente un cation monovalent, bivalent, trivalent ou tétravalent contenant le radioélément,
- x est tel que :

| | |
|---|---|
| $0 < x \leq 3$ | lorsque v = 4, |
| $0 < x \leq 0{,}26$ | lorsque v = 3 |
| $0 < x \leq 0{,}1$ | lorsque v = 2, et |
| $0 < x \leq 0{,}036$ | lorsque v = 1. |

**17.** Procédé de stockage de produits radioactifs, caractérisé en ce qu'il consiste à disperser ces produits dans une matrice de phosphate de thorium ou de phosphates mixtes de thorium selon l'une quelconque des revendications 1 à 3 et 8 à 12.

**18.** Procédé selon la revendication 17, caractérisé en ce que les produits radioactifs sont choisis parmi le radium, les actinides majeures: uranium et plutonium, les actinides mineurs : neptunium, américium et curium, et les produits de fission.

## Claims

**1.** Thorium phosphate of formula $Th_4P_6O_{23}$ (I) or $Th_4(PO_4)_4$ $(P_2O_7)$ (II).

**2.** Thorium phosphate according to claim 1, characterized in that it has the X-ray diffraction pattern shown in fig. 1.

**3.** Thorium phosphate according to either of the claims 1 and 2, characterized in that it crystallizes in an orthorhombic system, space group Pbcm and Z = 2.

**4.** Process for the preparation of thorium phosphate of formula $Th_4P_6O_{23}$, characterized in that it comprises the following stages:

a) preparing an aqueous solution optionally containing another water-miscible solvent and containing a thorium salt and a phosphating agent in quantities such that the Th/P atomic ratio is $\frac{1}{4}$ to $\frac{2}{3}$,
b) evaporating the solution to dryness at a temperature below 200°C and
c) subjecting the dry product to a heat treatment at least partly performed at a temperature from 850 to 1300°C.

**5.** Process according to claim 4, characterized in that the thorium salt is thorium tetrachloride or nitrate of formula $Th(NO_3)_4$, $4H_2O$.

**6.** Process according to either of the claims 4 and 5, characterized in that the phosphating agent is phosphoric acid or ammonium dihydrogenorthophosphate.

**7.** Process for the preparation of thorium phosphate of formula $Th_4P_6O_{23}$, characterized in that reaction takes place in the solid state of a thorium compound and a phosphating agent chosen from among ammonium dihydrogenorthophosphate and boron phosphate $BPO_4$, at a temperature of 165 to 210°C (on using $NH_4H_2PO_4$), followed

by at least one grinding and at least one heat treatment of the product obtained, at a temperature of 850 to 1300°C, the quantities of the thorium compound and the phosphating agent being such that the atomic Th/P ratio is $\frac{1}{4}$ to $\frac{2}{3}$.

**8.** Mixed thorium phosphate of formula:

$$Th_{4-x}M_{4x/v}P_6O_{23} \quad (III)$$

in which:

- M is a monovalent, divalent, trivalent or tetravalent cation,
- v represents the valency state of the cation and is equal to 1, 2, 3 or 4 and
- x is such that:

| | |
|---|---|
| $0 < x \leq 3$ | when v = 4, |
| $0 < x \leq 0.26$ | when v = 3, |
| $0 < x \leq 0.1$ | when v = 2, and |
| $0 < x \leq 0.036$ | when v = 1. |

**9.** Mixed thorium phosphate according to claim 8, characterized in that M represents U and v is equal to 4.

**10.** Mixed thorium phosphate according to claim 8, characterized in that M represents an alkaline earth metal or $UO_2^{2+}$ and v is equal to 2.

**11.** Mixed thorium phosphate according to claim 8, characterized in that M represents a rare earth element or a trivalent actinide and v is equal to 3.

**12.** Mixed thorium phosphate according to any one of the claims 8 to 11, characterized in that the cation M comprises a radioactive element.

**13.** Process for the preparation of a mixed thorium phosphate of formula:

$$Th_{4-x}M_{4x/v}P_6O_{23} \quad (III)$$

in which:

- M is a monovalent, divalent, trivalent or tetravalent cation,
- represents the valency state of the cation and is equal to 1, 2, 3 or 4 and
- x is such that:

| | |
|---|---|
| $0 < x \leq 3$ | when v = 4, |
| $0 < x \leq 0.26$ | when v = 3, |
| $0 < x \leq 0.1$ | when v = 2, and |
| $0 < x \leq 0.036$ | when v = 1, |

characterized in that it comprises the following stages:

a) preparing an aqueous or aqueous alcoholic solution incorporating a thorium salt, a salt of cation M and a phosphating agent in quantities such that the atomic ratio (Th + M)/P is approximately

$$\frac{4-x+\frac{4x}{v}}{6}$$

and that the cation M is not in excess compared with the maximum value of x given in formula (III),
b) evaporating the solution to dryness at a temperature below 200°C, and
c) subjecting the dry product to a heat treatment at a temperature of 850 to 1300°C.

**14.** Process for the preparation of a mixed thorium phosphate of formula:

$$Th_{4-x} M_{4x/v} P_6O_{23} \quad (III)$$

in which:

- M is a monovalent, divalent, trivalent or tetravalent cation,
- v represents the valency state of the cation and is equal to 1, 2, 3 or 4 and
- x is such that:

| | |
|---|---|
| $0 < x \leq 3$ | when v = 4, |
| $0 < x \leq 0.26$ | when v = 3, |
| $0 < x \leq 0.1$ | when v = 2, and |
| $0 < x \leq 0.036$ | when v = 1, |

characterized in that reaction in the solid state takes place of a thorium compound, a compound of M and a phosphating agent chosen from among ammonium dihydrogenorthophosphate and boron phosphate $BPO_4$, at a temperature of 165 to 210°C, followed by at least one grinding and at least one heat treatment of the product obtained at a temperature of 850 to 1300°C, the quantities of the thorium compound, the compound of cation M and the phosphating agent are such that the atomic ratio (Th + M)/P is approximately

$$\frac{4-x+\frac{4x}{v}}{6}$$

and that M is not in excess compared with the maximum value of x given in formula (III).

**15.** Process for the preparation of a mixed thorium phosphate of formula:

$$Th_{4-x} M_{4x/v} P_6O_{23} \quad (III)$$

in which:

- M is a monovalent, divalent, trivalent or tetravalent cation,
- v represents the valency state of the cation and is equal to 1, 2, 3 or 4 and
- x is such that:

| | |
|---|---|
| $0 < x \leq 3$ | when v = 4, |
| $0 < x \leq 0.26$ | when v = 3, |
| $0 < x \leq 0.1$ | when v = 2, and |
| $0 X x \leq 0.036$ | when v = 1, |

characterized in that reaction takes place in the solid state, in the form of a powder and at a temperature of 850 to 1350°C, of the thorium phosphate of $Th_4P_6O_{23}$ and a phosphate of the cation M in a quantity such that the cation M does not represent an excess compared with the maximum value of x in formula (III), followed by a heat treatment on the product obtained at a temperature of 850 to 1300°C.

**16.** Process for the storage of radioactive products containing radioelements, characterized in that it consists of including these radioelements in a mixed thorium phosphate of formula:

$$Th_{4-x} M_{4x/v} P_6O_{23} \quad (III)$$

in which:

- v represents the valency state of the cation and is equal to 1, 2, 3 or 4 and
- M represents a monovalent, divalent, trivalent or tetravalent cation containing the radioelement,
- x is such that:

| | |
|---|---|
| $0 < x \leq 3$ | when v = 4, |
| $0 < x \leq 0.26$ | when v = 3, |
| $0 < x \leq 0.1$ | when v = 2, and |
| $0 < x \leq 0.036$ | when v = 1. |

**17.** Process for the storage of radioactive products, characterized in that it consists of dispersing these products in a matrix of thorium phosphate or mixed thorium phosphates according to any one of the claims 1 to 3 and 8 to 12.

**18.** Process according to claim 17, characterized in that the radioactive products are chosen from among radium, major actinides: uranium and plutonium, minor actinides: neptunium, americium and curium, and fission products.

**Patentansprüche**

**1.** Thoriumphosphat der Formel $Th_4P_6O_{23}$ (I) oder $Th_4(PO_4)_4(P_2O_7)$ (II).

**2.** Thoriumphosphat nach Anspruch 1, dadurch gekennzeichnet, daß es das in Fig. 1 dargestellte Röntgenbeugungsdiagramm aufweist.

**3.** Thoriumphosphat nach einem der Ansprüche 1 und 2, dadurch gekennzeichnet, daß es in einem orthorhombischen System, Raumgruppe Pbcm und Z = 2, kristallisiert.

**4.** Verfahren zur Herstellung von Thoriumphosphat der Formel $Th_4P_6O_{23}$, dadurch gekennzeichnet, daß es die folgenden Schritte umfaßt:

a) eine wäßrige Lösung herzustellen, die gegebenenfalls ein weiteres mit Wasser mischbares Lösungsmittel enthält und die ein Thoriumsalz und ein phosphatierendes Reagens in derartigen Mengen einschließt, daß das Atomverhältnis Th/P 1/4 bis 2/3 beträgt,
b) die Lösung bei einer Temperatur unter 200°C zur Trockne einzudampfen und
c) das trockene Produkt einer Wärmebehandlung zu unterziehen, die zumindest teilweise bei einer Temperatur ausgeführt wird, die von 850 bis 1300°C geht.

**5.** Verfahren nach Anspruch 4, dadurch gekennzeichnet, daß das Thoriumsalz Thoriumtetrachlorid oder das Nitrat der Formel $Th(NO_3)_4 \cdot 4H_2O$ ist.

**6.** Verfahren nach einem der Ansprüche 4 und 5, dadurch gekennzeichnet, daß das phosphatierende Reagens Phosphorsäure oder Ammoniumdihydrogenphosphat ist.

**7.** Verfahren zur Herstellung von Thoriumphosphat der Formel $Th_4P_6O_{23}$, dadurch gekennzeichnet, daß man eine Thoriumverbindung und ein phosphatierendes Reagens, gewählt unter Ammoniumdihydrogenphosphat und Borphosphat $BPO_4$, im festen Zustand bei einer Temperatur von 165 bis 210°C reagieren läßt (wenn man $NH_4H_2PO_4$ verwendet), dann mindestens eine Zerkleinerung und mindestens eine Wärmebehandlung des erhaltenen Produkts bei einer Temperatur von 850 bis 1300°C ausführt, wobei die Mengen der Thoriumverbindung und des phosphatierenden Reagens derart sind, daß das Atomverhältnis Th/P 1/4 bis 2/3 ist.

**8.** Gemischtes Thoriumphosphat der Formel:

$$Th_{4-x}M_{4x/v}P_6O_{23} \quad \text{(III)}$$

worin

- M ein einwertiges, zweiwertiges, dreiwertiges oder vierwertiges Kation ist,
- v den Valenzzustand des Kations darstellt und gleich 1, 2, 3 oder 4 ist und
- x derart ist, daß:

| | |
|---|---|
| $0 < x \leq 3$, | wenn v = 4, |
| $0 < x \leq 0{,}26$, | wenn v = 3, |
| $0 < x \leq 0{,}1$, | wenn v = 2, und |
| $0 < x \leq 0{,}036$, | wenn v = 1. |

**9.** Gemischtes Thoriumphosphat nach Anspruch 8, dadurch gekennzeichnet, daß M U darstellt und v gleich 4 ist.

**10.** Gemischtes Thoriumphosphat nach Anspruch 8, dadurch gekennzeichnet, daß M ein Erdalkalimetall oder $UO_2^{2}+$ darstellt und v gleich 2 ist.

**11.** Gemischtes Thoriumphosphat nach Anspruch 8, dadurch gekennzeichnet, daß M ein Element der seltenen Erden oder ein dreiwertiges Aktinidenelement darstellt und v gleich 3 ist.

**12.** Gemischtes Thoriumphosphat nach einem der Ansprüche 8 bis 11, dadurch gekennzeichnet, daß das Kation M ein radioaktives Element umfaßt.

**13.** Verfahren zur Herstellung eines gemischten Thoriumphosphats der Formel:

$$Th_{4-x}M_{4x/v}P_6O_{23} \qquad (III)$$

worin:

- M ein einwertiges, zweiwertiges, dreiwertiges oder vierwertiges Kation ist,
- v den Valenzzustand des Kations darstellt und gleich 1, 2, 3 oder 4 ist und
- x derart ist, daß:

$0 < x \leq 3$, wenn v = 4,
$0 < x \leq 0{,}26$, wenn v = 3,
$0 < x \leq 0{,}1$, wenn v = 2, und
$0 < x \leq 0{,}036$, wenn v = 1,

dadurch gekennzeichnet, daß es die folgenden Schritte umfaßt:

a) eine wäßrige oder wäßrig-alkoholische Lösung herzustellen, die ein Thoriumsalz, ein Salz des Kations M und ein phosphatierendes Reagens in derartigen Mengen enthält, daß das Atomverhältnis (Th + M)/P ungefähr (4-x+4x/v)/6 ist und daß das Kation M gegenüber dem in der Formel (III) gegebenen maximalen Wert von x nicht im Überschuß ist,
b) die Lösung bei einer Temperatur unter 200°C zur Trockne einzudampfen und
c) das trockene Produkt einer Wärmebehandlung zu unterziehen, die bei einer Temperatur von 850 bis 1300°C ausgeführt wird.

**14.** Verfahren zur Herstellung eines gemischten Thoriumphosphats der Formel:

$$Th_{4-x}M_{4x/v}P_6O_{23} \qquad (III)$$

worin:

- M ein einwertiges, zweiwertiges, dreiwertiges oder vierwertiges Kation ist,
- v den Valenzzustand des Kations darstellt und gleich 1, 2, 3 oder 4 ist und
- x derart ist, daß:

$0 < x \leq 3$, wenn v = 4,
$0 < x \leq 0{,}26$, wenn v = 3,
$0 < x \leq 0{,}1$, wenn v = 2, und
$0 < x \leq 0{,}036$, wenn v = 1,

dadurch gekennzeichnet, daß man eine Thoriumverbindung, eine Verbindung von M und ein phosphatierendes Reagens, das unter Ammoniumdihydrogenphosphat und Borphosphat $BPO_4$ gewählt ist, im festen Zustand bei einer Temperatur von 165 bis 210°C reagieren läßt, dann mindestens eine Zerkleinerung und mindestens eine Wärmebehandlung des erhaltenen Produkts bei einer Temperatur von 850 bis 1300°C ausführt, wobei die Mengen der Thoriumverbindung, der Verbindung des Kations M und des phosphatierenden Reagens derart sind, daß das Atomverhältnis (Th + M)/P ungefähr (4-x+4x/v)/6 ist und daß M gegenüber dem für die Formel (III) gegebenen maximalen Wert von x nicht im Überschuß ist.

**15.** Verfahren zur Herstellung eines gemischten Thoriumphosphats der Formel:

$$Th_{4-x}M_{4x/v}P_6O_{23} \quad (III)$$

worin:

- M ein einwertiges, zweiwertiges, dreiwertiges oder vierwertiges Kation ist,
- v den Valenzzustand des Kations darstellt und gleich 1, 2, 3 oder 4 ist und
- x derart ist, daß:

$0 < x \leq 3$, wenn $v = 4$,
$0 < x \leq 0{,}26$, wenn $v = 3$,
$0 < x \leq 0{,}1$, wenn $v = 2$, und
$0 < x \leq 0{,}036$, wenn $v = 1$,

dadurch gekennzeichnet, daß man im festen Zustand in Pulverform bei einer Temperatur von 850 bis 1350°C Thoriumphosphat der Formel $Th_4P_6O_{23}$ mit einem Phosphat des Kations M in derartiger Menge reagieren läßt, daß das Kation M gegenüber dem maximalen Wert von x in der Formel (III) keinen Überschuß darstellt, und dann eine Wärmebehandlung des erhaltenen Produkts bei einer Temperatur von 850 bis 1300°C ausführt.

**16.** Verfahren zur Lagerung von radioaktiven Produkten, die Radioelemente enthalten, dadurch gekennzeichnet, daß es darin besteht, diese Radioelemente einzuschließen in ein gemischtes Thoriumphosphat der Formel

$$Th_{4-x}M_{4x/v}P_6O_{23} \quad (III)$$

worin:

- v den Valenzzustand des Kations darstellt und gleich 1, 2, 3 oder 4 ist,
- M ein einwertiges, zweiwertiges, dreiwertiges oder vierwertiges Kation ist und
- x derart ist, daß:

$0 < x \leq 3$, wenn $v = 4$,
$0 < x \leq 0{,}26$, wenn $v = 3$,
$0 < x \leq 0{,}1$, wenn $v = 2$, und
$0 < x \leq 0{,}036$, wenn $v = 1$.

**17.** Verfahren zur Lagerung von radioaktiven Produkten, dadurch gekennzeichnet, daß es darin besteht, diese Produkte in einer Matrix von Thoriumphosphat oder von gemischten Thoriumphosphaten nach einem der Ansprüche 1 bis 3 und 8 bis 12 zu dispergieren.

**18.** Verfahren nach Anspruch 17, dadurch gekennzeichnet, daß die radioaktiven Produkte unter Radium, den Haupt-Aktiniden, nämlich Uran und Plutonium, den sekundären Aktiniden, nämlich Neptunium, Americium und Curium, und den Spaltprodukten gewählt werden.

FIG. 1

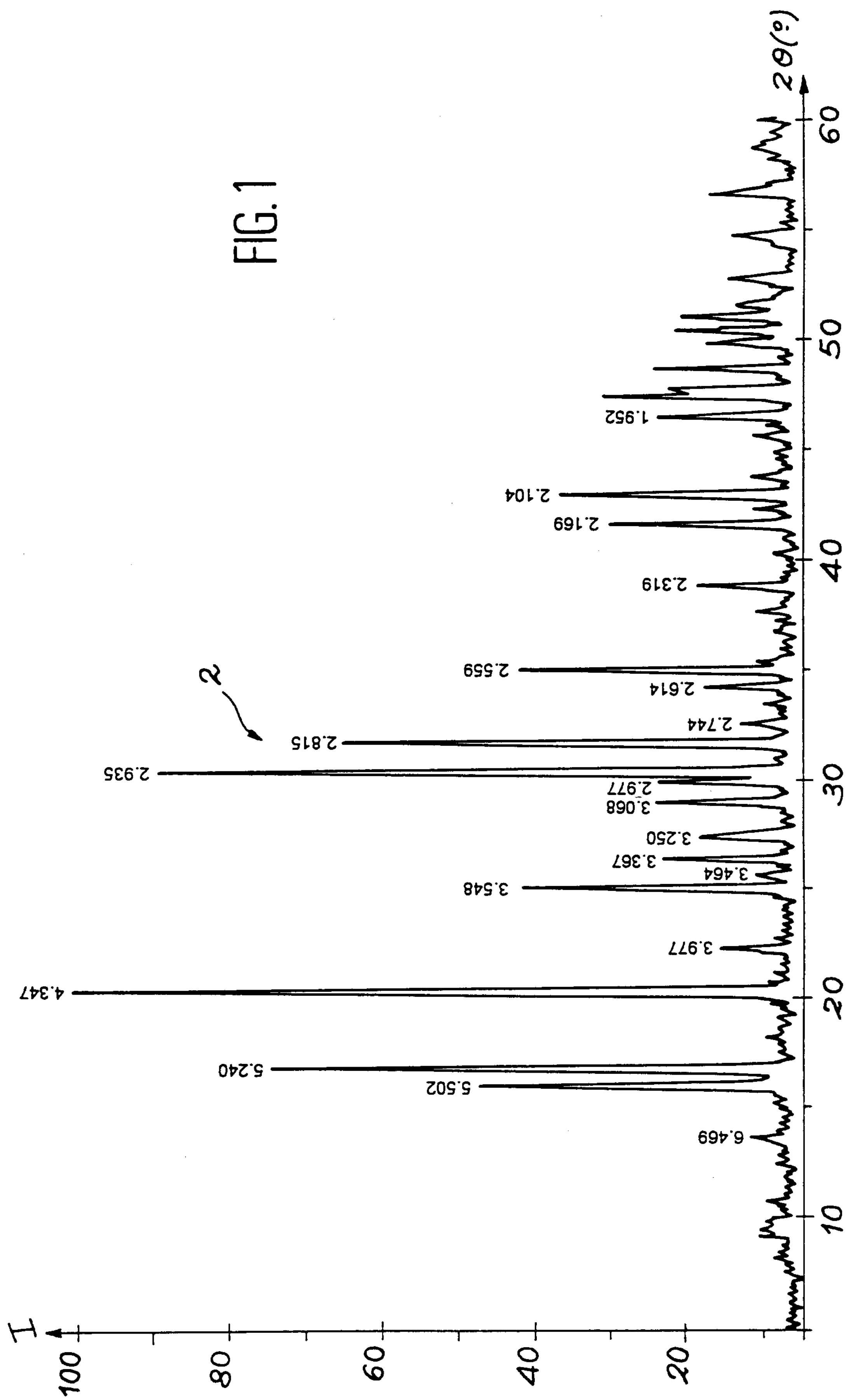
I
100
80
60
40
20
10
20
30
40
50
60
2θ(°)
2
6.469
5.502
5.240
4.347
3.977
3.548
3.464
3.367
3.250
3.068
2.977
2.935
2.815
2.744
2.614
2.559
2.319
2.169
2.104
1.952

FIG. 2

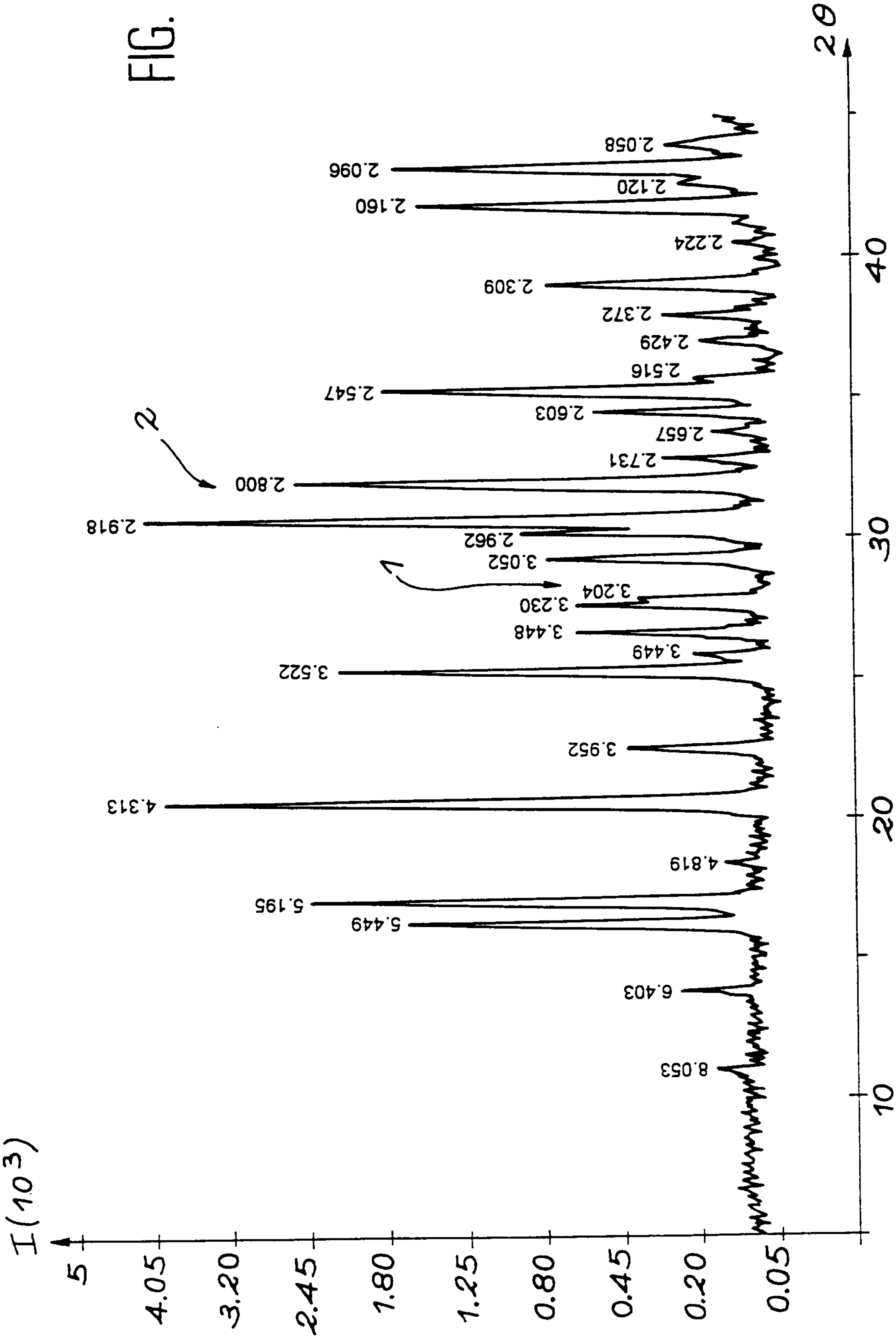
I (10³)
2θ (°)
5
4.05
3.20
2.45
1.80
1.25
0.80
0.45
0.20
0.05
10
20
30
40
8.053
6.403
5.449
5.195
4.819
4.313
3.952
3.522
3.449
3.448
3.230
3.204
3.052
2.962
2.918
2.800
2.731
2.657
2.603
2.547
2.516
2.429
2.372
2.309
2.224
2.160
2.120
2.096
2.058
1
2

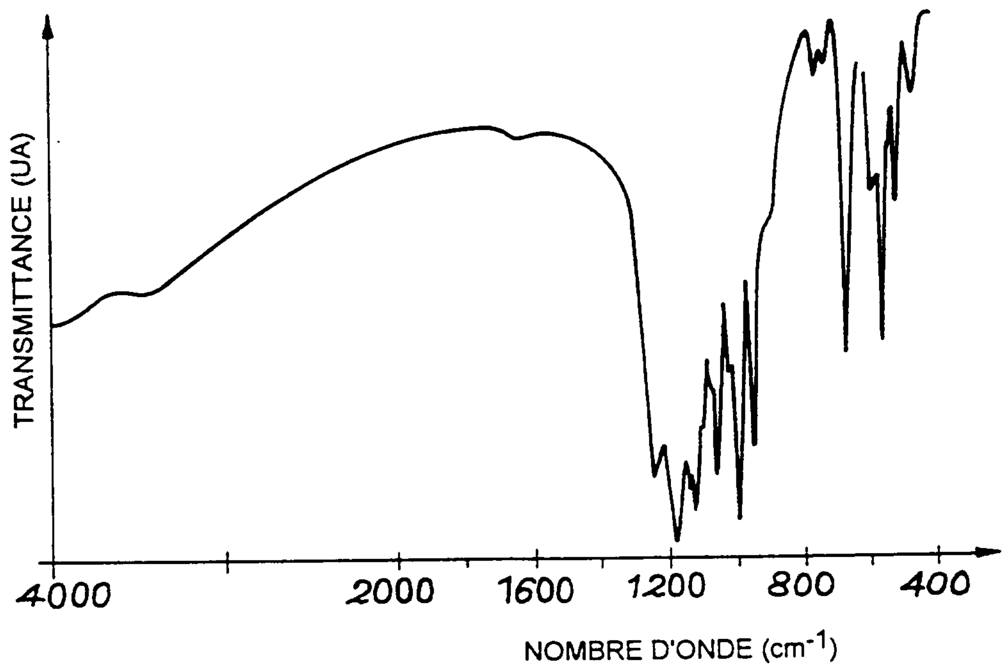
TRANSMITTANCE (UA)
4000
2000
1600
1200
800
400
NOMBRE D'ONDE ($cm^{-1}$)

FIG. 3

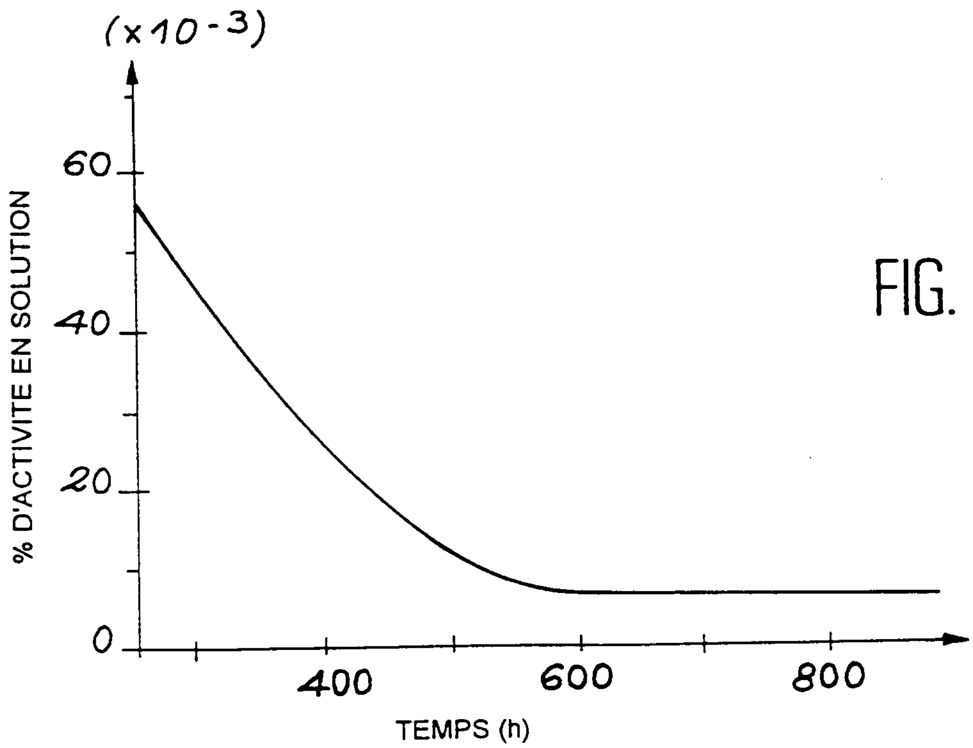
($\times 10^{-3}$)
% D'ACTIVITE EN SOLUTION
60
40
20
0
400
600
800
TEMPS (h)

FIG. 4